Europäisches Patentamt

European Patent Office

Office européen des brevets

(11) Numéro de publication : **0 390 688 B1**

# (12) FASCICULE DE BREVET EUROPEEN

(45) Date de publication du fascicule du brevet :
**26.08.92 Bulletin 92/35**

(51) Int. Cl.$^5$ : **B62D 5/04**

(21) Numéro de dépôt : **90400858.8**

(22) Date de dépôt : **29.03.90**

(54) **Dispositif d'assistance pour l'entraînement en rotation d'un arbre à barre intermédiaire de torsion, notamment d'une colonne de direction de véhicule automobile.**

(30) Priorité : **30.03.89 FR 8904145**

(43) Date de publication de la demande :
**03.10.90 Bulletin 90/40**

(45) Mention de la délivrance du brevet :
**26.08.92 Bulletin 92/35**

(84) Etats contractants désignés :
**DE FR GB IT**

(56) Documents cités :
**EP-A- 0 186 053**
**FR-A- 2 147 475**
**FR-A- 2 242 009**
**FR-A- 2 580 249**

(73) Titulaire : **VALEO ELECTRONIQUE**
**12-14, Rue Jean Bart**
**F-78960 Voisins-Le-Bretonneux (FR)**

(72) Inventeur : **Tranchon, Georges**
**18, rue du Docteur Plichon**
**F-94000 Créteil (FR)**
Inventeur : **Ferry, Jacques**
**204, rue de la Croix Nivert**
**F-75015 Paris (FR)**
Inventeur : **Tournier, Henri**
**10, Allée des Marronniers**
**F-95120 Ermont (FR)**

(74) Mandataire : **Martin, Jean-Jacques et al**
**Cabinet REGIMBEAU 26, Avenue Kléber**
**F-75116 Paris (FR)**

## Description

L'invention concerne un dispositif d'assistance pour l'entraînement en rotation d'un arbre, et plus spécialement d'une colonne de direction de véhicule automobile, auquel cas le dispositif fait partie de la direction assistée du véhicule.

Il existe déjà de nombreux systèmes développés pour mettre en oeuvre des directions assistées de véhicules automobiles.

D'une façon générale, les systèmes connus sont conçus pour être en service en permanence, et leur action est le plus souvent indépendante de la vitesse du véhicule.

On trouve ainsi de nombreux systèmes hydrauliques, agissant au niveau de l'essieu avant, en général par l'intermédiaire d'un piston actionné par une pompe hydraulique et coopérant avec la crémaillère de la direction du véhicule.

De tels systèmes procurent une assistance à l'effort, avec un couple démultiplié sur la colonne de direction.

Ces systèmes sont performants, mais sont onéreux et impliquent une consommation d'énergie élevée (celle-ci pouvant atteindre 0,8 litre d'essence pour cent kilomètres), de sorte que leur utilisation reste limitée à des véhicules haut de gamme.

De tels systèmes impliquent par ailleurs la présence de capteurs, en général pour l'effort et le sens de rotation du volant, et parfois aussi, quoique plus rarement, pour la vitesse du véhicule lorsque l'on souhaite disposer d'une stratégie de durcissement (ce dernier cas complique naturellement la structure, et augmente encore le coût de fabrication). Pour les deux premières fonctions, on utilise en général un organe commun qui est un tiroir rotatif associé à une barre de torsion.

Ceci explique que les systèmes hydrauliques sont inenvisageables pour des véhicules bas de gamme, pour lesquels on recherche avant tout des systèmes de conception simple, qui soient robustes et économiques à réaliser.

Il existe par ailleurs de nombreux systèmes électriques utilisant un moteur agissant directement soit sur la crémaillère de la direction du véhicule, soit sur la colonne de direction.

De tels systèmes peuvent procurer une assistance à l'effort ou au nombre de tours, mais ils restent relativement onéreux pour être envisagés sur des véhicules bas de gamme.

Ces systèmes impliquent également la présence de capteurs, mais ces capteurs sont souvent associés à des asservissements complexes.

A la différence des systèmes hydrauliques précités, les systèmes électriques comportent des capteurs différents pour l'effort et pour le sens de rotation du volant ; pour l'effort, il s'agit en général d'une barre de torsion associée à un système de mesure de couple sur un arbre (anneau déformable, jauges de contraintes, etc...), de façon que le moteur d'assistance agisse sur la portion d'arbre menée en fonction du couple exercé sur la portion d'arbre menante (la barre de torsion étant intercalée entre ces deux portions d'arbres coaxiales).

Par ailleurs, la variation d'assistance en fonction de la vitesse du véhicule est, dans le cas des systèmes électriques, de plus en plus recherchée, essentiellement pour améliorer la sécurité.

Pour illustrer l'arrière-plan technologique, on peut en particulier citer le document FR-A-1 595 813, dans lequel est décrit un mécanisme de direction assistée du type de ceux utilisés il y a une vingtaine d'années.

Ce mécanisme comprend un arbre de direction divisé en deux parties désaxées, qui sont reliées par un train d'engrenages de sorte que la rotation de la première partie fait tourner la deuxième partie, un moteur électrique réversible capable de faire tourner un arbre de sortie dans les deux sens, un deuxième train d'engrenages qui relie l'arbre de sortie du moteur électrique à la deuxième partie de l'arbre de direction de sorte que l'entraînement de cet arbre de sortie en rotation par le moteur électrique assiste la rotation de la deuxième partie de l'arbre de direction, et des moyens servant à commander le fonctionnement du moteur électrique en fonction du couple de réaction qui s'exerce entre les éléments du train d'engrenages qui relie les deux parties de l'arbre de direction.

Un tel mécanisme était très complexe et très onéreux, notamment en raison de la présence de nombreux pignons et de masses basculables, et sa fiabilité était fort douteuse. De plus, la présence d'une colonne de direction coupée et désaxée constituait un inconvénient important. Enfin, il était nécessaire de procéder fréquemment à des réglages du mécanisme, réglages qui étaient souvent très délicats.

Un autre système électrique plus récent est illustré dans le document FR-A-2 242 009.

Ce mécanisme comprend des moyens détecteurs destinés à détecter un couple de rotation appliqué sur l'arbre et à fournir un signal à la suite de cette détection, et constitués soit par un torsiomètre comprenant une barre de torsion et une jauge de contrainte, soit un dynamomètre piézo-électrique, soit encore un dispositif de détection avec élément déformable en torsion dont une bride inférieure porte deux inverseurs; il comprend en outre des moyens moteurs (motoréducteur ou moteur électrique) destinés à être sélectivement couplés à l'arbre par un dispositif d'embrayage, ainsi que des moyens de commande (circuit de commande, amplificateur, inverseurs) destinés à commander ces moyens moteurs et le dispositif d'embrayage pour appliquer à l'arbre un couple d'assistance à la suite de la détection d'un couple de rotation exercé sur ledit arbre.

Un tel système est certes avantageux dans la mesure où la colonne de direction n'est pas coupée, où le moteur électrique tourne toujours dans le même sens que la colonne de direction, et où le mécanisme est débrayable.

Il est en particulier indiqué dans ce brevet un certain nombre de facteurs pouvant être considérés comme avantageux :

– le dispositif d'assistance possède un organe de liaison temporaire sous forme d'un dispositif d'embrayage à commande électrique provoquant la désolidarisation automatique et immédiate de l'équipement et de la colonne de direction en cas de panne de courant ;

– lorsque le dispositif n'est pas utilisé, y compris dans le cas d'une panne de courant, les organes de direction sont aussi libres que sur le véhicule dépourvu d'assistance ;

– le conducteur a toujours le loisir de supprimer l'action de l'assistance, en particulier lorsque son fonctionnement serait désagréable (encombrements urbains, montagne, promenade sur route à faible vitesse).

Cependant, il n'en reste pas moins indispensable de prévoir, là encore, des asservissements relativement complexes, altérant sensiblement la fiabilité du système (sensibilité aux vibrations, présence de frotteurs sensibles à l'usure), de sorte que la structure reste complexe et le coût de fabrication élevé.

Plus récemment, on a proposé un dispositif d'assistance pour l'entraînement en rotation d'un arbre, notamment d'une colonne de direction d'un véhicule automobile, comportant un moteur d'assistance agissant sur une portion d'arbre menée en fonction du déplacement relatif d'une portion d'arbre menante reliée à ladite portion d'arbre menée par l'intermédiaire d'une barre de torsion, ledit dispositif comportant en outre d'une part un carter fixe formant logement pour la barre intermédiaire de torsion et dans lequel tourillonnent ladite portion d'arbre menante et ladite portion d'arbre menée, et d'autre part des moyens de détection disposés dans ledit carter et servant à détecter le déphasage angulaire entre ladite portion d'arbre menante et ladite portion d'arbre menée, de façon à réaliser l'assistance par la commande dudit moteur lorsqu'un déphasage est détecté, conformément au préambule de la revendication 1.

Un tel dispositif d'assistance est par exemple illustré dans le document EP-A-0 194 930, les moyens de détection utilisés étant alors constitués par deux roues codeuses dont l'une est solidaire en rotation de la portion d'arbre menante, tandis que l'autre est solidaire en rotation de la portion d'arbre menée, le déphasage angulaire entre ces deux roues étant détecté par des moyens optiques.

Une telle solution reste cependant onéreuse, et la structure du dispositif est relativement fragile. De plus, cette solution ne permet pas de différencier le sens de rotation des deux roues codeuses, ce qui induit une certaine imprécision, et nécessite d'ajouter un capteur d'angle supplémentaire.

L'état de la technique est enfin également illustré par les documents JP-A-59 143 765, FR-A-2 580 249, GB-A-1 587 239, DE-A-31 06 088, EP-A-0 163 244 et EP-A-0 186 053.

L'invention a pour objet de concevoir un dispositif d'assistance pour l'entraînement d'un arbre à barre intermédiaire de torsion, et plus particulièrement (mais pas nécessairement) d'une colonne de direction de véhicule automobile, dont la structure soit plus simple et plus robuste que celle des systèmes connus rappelés plus haut, notamment de façon à pouvoir être monté sur des véhicules bas de gamme.

L'invention a aussi pour objet de concevoir un dispositif d'assistance dont les capteurs sont intégrés dans un carter logeant ledit dispositif.

L'invention a également pour objet de réaliser un dispositif qui ne soit pas en service en permanence, et qui dépende de façon simple de la vitesse du véhicule lorsque ledit dispositif fait partie de la direction assistée d'un véhicule automobile. En effet, si l'assistance est appréciée à basse vitesse, elle est souvent jugée inutile, voire inopportune, à des vitesses élevées.

Il s'agit plus particulièrement d'un dispositif d'assistance pour l'entraînement en rotation d'un arbre, notamment d'une colonne de direction d'un véhicule automobile, comportant un moteur d'assistance agissant sur une portion d'arbre menée en fonction du déplacement relatif d'une portion d'arbre menante reliée à ladite portion d'arbre menée par l'intermédiaire d'une barre de torsion, ledit dispositif comportant en outre d'une part un carter fixe formant logement pour la barre intermédiaire de torsion et dans lequel tourillonnent ladite portion d'arbre menante et ladite portion d'arbre menée, et d'autre part des moyens de détection disposés dans ledit carter et servant à détecter le déphasage angulaire entre ladite portion d'arbre menante et ladite portion d'arbre menée, de façon à réaliser l'assistance par la commande dudit moteur lorsqu'un déphasage est détecté, caractérisé par le fait que les moyens de détection comprennent d'une part des premiers moyens de détection associés à la portion d'arbre menante, lesdits premiers moyens de détection étant essentiellement constitués par une roue solidaire en rotation de ladite portion d'arbre menante, avec cependant possibilité d'un coulissement axial par rapport à celle-ci, et par un double capteur de proximité monté sur le carter fixe et associé à ladite roue pour permettre une détection supplémentaire du sens de rotation, et d'autre part des seconds moyens de détection associés à la portion d'arbre menée, lesdits seconds moyens de détection étant essentiellement constitués par des biellettes de transmission, reliant ladite portion d'arbre menée à ladite roue de façon à déplacer celle-ci, dans une direction axiale ou dans la direction axiale opposée, proportionnellement au déphasage relatif entre les deux portions d'arbre.

Il est alors avantageux que la roue porte une couronne périphérique aimantée passant entre deux capteurs à effet Hall constituant le double capteur de proximité.

De préférence aussi, la roue est soumise à l'action de moyens élastiques de rappel tendant à la repousser vers la portion d'arbre menée, disposés entre ladite roue et une couronne de butée solidaire en rotation de la portion d'arbre menante.

Il est également intéressant que le dispositif d'assistance comporte un manchon cylindrique monté sur la portion d'arbre menée, solidairement et coaxialement à celle-ci, et sur lequel sont articulées les biellettes de transmission disposées tangentiellement; en particulier, le manchon cylindrique présente en outre une couronne dentée, engrenant avec un pignon monté sur l'arbre de sortie du moteur d'assistance.

D'une façon générale, le moteur d'assistance sera de préférence un moteur électrique logé dans le carter fixe.

Enfin, conformément à une application préférée dans le cadre de la présente invention, le dispositif d'assistance est un dispositif faisant partie de la direction assistée d'un véhicule automobile, dans lequel la portion d'arbre menante est un arbre de la colonne de direction côté volant et la portion d'arbre menée est un arbre de la colonne de direction côté roues, et ce dispositif est alors caractérisé par le fait que les moyens de détection agissent sur la commande du moteur d'assistance en fonction de la vitesse du véhicule, au regard d'une vitesse faible prédéterminée, de façon à ne réaliser l'assistance que lorsque la vitesse du véhicule est inférieure à cette vitesse faible prédéterminée.

D'autres caractéristiques et avantages de l'invention apparaîtront plus clairement à la lumière de la description qui va suivre et des dessins annexés, concernant des modes de réalisation particuliers, en référence aux figures, où :

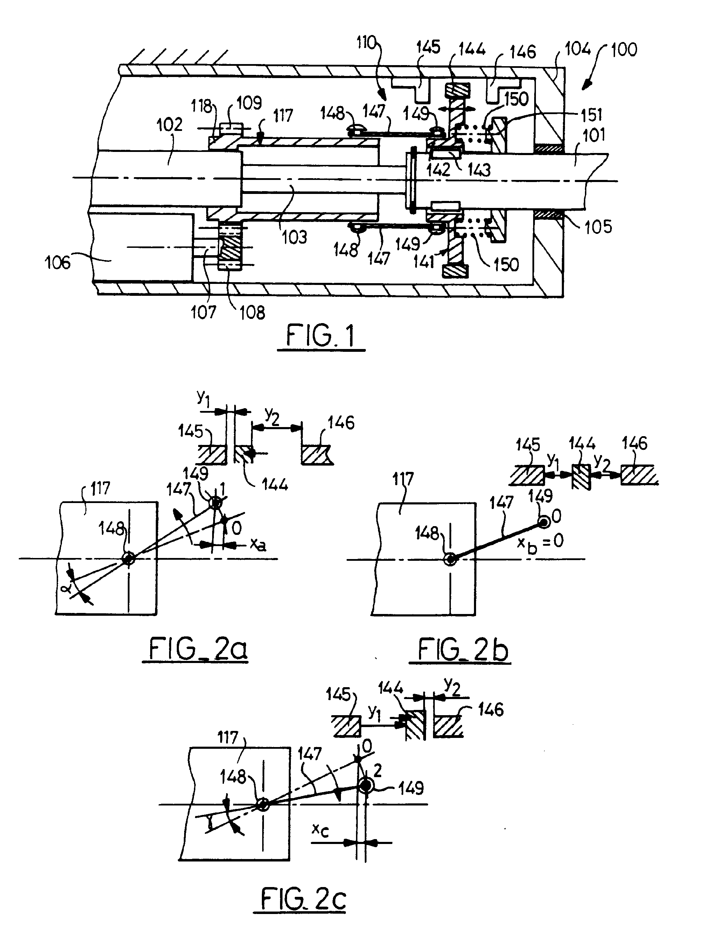

– la figure 1 est une coupe illustrant un dispositif d'assistance conforme à l'invention, avec un système couplé de capteurs permettant la double détection du couple et du sens de rotation, par l'intermédiaire de biellettes de transmission et de capteurs (fixes) à effet Hall ;

– les figures 2a, 2b, 2c sont des vues schématiques illustrant le fonctionnement du dispositif de la figure 1, respectivement avec déphasage dans un sens, au repos ou sans déphasage, et avec déphasage dans l'autre sens (on a représenté schématiquement une biellette de transmission dans ces trois positions angulaires, et la position correspondante de la couronne périphérique aimantée entre les deux capteurs à effet Hall associés).

La figure 1 illustre un arbre constitué par une portion d'arbre menante 101, une portion d'arbre menée 102, et une barre intermédiaire de torsion 103. Dans le cas particulier où le dispositif d'assistance 100 qui va être décrit en détail ci-après fait partie de la direction assistée d'un véhicule automobile, la portion d'arbre menante 101 correspond à un arbre de la colonne de direction côté volant, et la portion d'arbre menée 102 correspond à un arbre de la colonne de direction côté roues. Il convient de noter que dans ce cas, la colonne de direction n'est pas coupée, et est constituée de portions coaxiales.

Le dispositif d'assistance 100 comporte un carter fixe 104 formant logement pour la barre intermédiaire de torsion 103, et dans lequel tourillonnent la portion d'arbre menante 101 et la portion d'arbre menée 102 par l'intermédiaire de paliers tels que le palier 105. Le carter fixe 104 sert également de logement pour des moyens de détection 110 disposés dans ledit carter et servant à détecter le déphasage angulaire entre la portion d'arbre menante 101 et la portion d'arbre menée 102, de façon à réaliser l'assistance par la commande d'un moteur d'assistance associé 106 lorsqu'un déphasage est détecté.

Conformément à un aspect essentiel de l'invention, les moyens de détection 110 comportent des premiers moyens de détection associés à la portion d'arbre menante, et des seconds moyens de détection associés à la portion d'arbre menée, lesdits premiers et seconds moyens de détection présentant une structure particulière qui va être décrite ci-après en détail.

Le dispositif d'assistance 100 est prévu pour permettre une double détection du couple et du sens de rotation, avec des capteurs montés fixes, en évitant l'utilisation de moyens optiques : le dispositif d'assistance 100 utilise à cet effet un système couplé de capteurs à effet Hall, ainsi qu'un système de biellettes de transmission.

Les premiers moyens de détection associés à la portion d'arbre menante 101 sont essentiellement constitués par une roue 141 solidaire en rotation de ladite portion d'arbre menante, avec cependant possibilité d'un coulissement axial par rapport à celle-ci, et par un double capteur de proximité 145, 146 monté sur le carter fixe 104, ce double capteur étant associé à la roue 141 pour permettre une détection supplémentaire du sens de rotation. La roue 141 est ainsi montée par un moyeu 142 sur la portion d'arbre menante 101, à laquelle elle est solidarisée en rotation par une clavette 143; cette roue porte par ailleurs une couronne périphérique aimantée 144, qui passe entre deux capteurs à effet Hall 145, 146 qui constituent le double capteur de proximité précité. Le déplacement axial, dans un sens ou dans l'autre, de la roue 141 peut alors être aisément détecté par les deux capteurs 145, 146, de préférence en procédant par différence de signaux. La roue 141 est par ailleurs en permanence soumise à l'action de moyens élastiques de rappel, tels que des ressorts 150, tendant à la repousser vers la portion d'arbre menée 102 : ces ressorts 150 sont ici disposés entre ladite roue et une couronne de butée 151 solidaire en rotation de la portion d'arbre menante 101. Un tel agencement permet ainsi de détecter aisément le sens de rotation.

Pour ce qui est du couple à détecter, on utilise un agencement essentiellement mécanique, à la différence des moyens de détection de type optique utilisés dans les dispositifs d'assistance connus.

Les seconds moyens de détection associés à la portion d'arbre menée 102 sont en effet essentiellement constitués par des biellettes de transmission 147 reliant ladite portion d'arbre menée à la roue 141, de façon à déplacer ladite roue dans une direction axiale ou dans la direction axiale opposée, proportionnellement au déphasage relatif entre les portions d'arbre 101, 102.

Plus précisément, le dispositif d'assistance 100 comporte un manchon cylindrique 117 monté sur la portion d'arbre menée 102, solidairement et coaxialement à celle-ci, et sur lequel sont articulées les biellettes de transmission 147 disposées tangentiellement. Ces biellettes de transmission 147 sont articulées à l'une de leurs extrémités par un pion 148 fixé au manchon cylindrique 117, et à leur autre extrémité par un pion 149 fixé au moyeu 142 de la roue 141. Les biellettes de transmission 147 seront de préférence choisies légèrement déformables en torsion, afin d'éviter la présence de rotules qui compliqueraient notablement la structure.

Le manchon cylindrique 117 présente en outre une couronne dentée 109, engrènant avec un pignon 108 monté sur l'arbre de sortie 107 du moteur d'assistance 106. Le moteur d'assistance 106 agit ainsi directement sur le manchon cylindrique 117, dont le diamètre extérieur est nettement plus grand que celui de la portion d'arbre menée 102, ce qui permet d'utiliser un moteur électrique de puissance modérée, par exemple 100 à 200 Watts. Ce moteur électrique pourra en outre être de préférence débrayable.

Ainsi que cela est aisé de le comprendre, le déphasage entre les portions d'arbres 101 et 102 résultant d'un couple produit automatiquement une rotation des biellettes de transmission 147, et donc un déplacement proportionnel de la roue 141 dans une direction axiale correspondant au sens de rotation. On parvient ainsi à détecter aisément le couple appliqué, et ce par des moyens purement mécaniques, les moyens de détection 110 ainsi constitués formant ici un capteur couplé à double détection du couple et du sens de rotation.

Dans le cadre de l'application particulière à une direction assistée d'un véhicule automobile, les moyens de détection 110 seront de préférence prévus pour agir sur la commande du moteur d'assistance 106 en fonction de la vitesse du véhicule, au regard d'une vitesse faible prédéterminée, de façon à ne réaliser l'assistance que lorsque la vitesse du véhicule est inférieure à cette vitesse faible prédéterminée (par exemple 10 ou 20 km/h). Ainsi, lorsque le conducteur manœuvre le volant, il applique un couple à l'arbre 101 de la colonne de direction côté volant, et ce couple entraîne une déformation de la barre de torsion 103, ainsi qu'un déplacement axial de la roue 141 résultant directement de la rotation des biellettes de transmission 147. Lorsque la vitesse du véhicule est inférieure à la vitesse prédéterminée, le moteur d'assistance 106 agit dans la direction convenable jusqu'à suppression du déphasage entre les arbres de la colonne de direction.

Les figures 2a, 2b, 2c, permettent d'illustrer clairement le fonctionnement du dispositif de la figure 1, respectivement avec déphasage dans un sens, au repos ou sans déphasage, et avec déphasage dans l'autre sens.

Sur ces figures, on a présenté schématiquement l'extrémité du manchon 117 (solidaire en rotation de la portion d'arbre menée 102), une biellette de transmission 147 avec ses pions d'attache associés 148 et 149, et d'autre part l'extrémité de la couronne périphérique aimantée 144 qui est disposée entre les deux capteurs à effet Hall 145, 146.

– Figure 2a : à la suite d'un couple exercé sur la portion d'arbre menante, ici dans un sens horaire, la biellette de transmission 147 a tourné d'un angle $\alpha$ par rapport à sa position de repos (dans laquelle le pion 149 est passé de la position 0 à la position 1), ce qui a induit un déplacement axial $x_a$ de la roue 141 portant la couronne aimantée 144 ; la couronne aimantée 144 s'est rapprochée du capteur à effet Hall 145, en étant alors espacée d'un intervalle $Y_1$ du capteur 145 et d'un intervalle $Y_2$ du capteur 146, ces déplacements étant liés par la relation $x_a = \frac{1}{2}(Y_2 - Y_1)$, la valeur $x_a$ étant de signe positif. Le signal représentatif de cette différence permet alors d'agir sur le moteur d'assistance 106, dans le sens convenable, pour supprimer le déphasage entre les deux portions d'arbre, en ramenant la couronne aimantée 144 à égale distance des capteurs à effet Hall 145, 146.

– Figure 2b : il s'agit d'une position de repos ou sans déphasage, ou position 0, dans laquelle le pion 149 de la biellette de transmission 147 subit un déplacement $x_b$ qui est nul, et la couronne aimantée 144 est espacée des capteurs 145 et 146 par des intervalles alors égaux $Y_1$, $Y_2$. La différence entre ces intervalles est de ce fait nulle, et aucune instruction de commande n'est adressée au moteur électrique d'assistance 106.

– Figure 2c : la position est alors l'inverse de celle illustrée en figure 2a, la biellette 147 a tourné d'un

angle $\gamma$, ce qui a induit un déplacement $x_c$ du pion 149 par rapport à la position de repos (le pion 149 est passé de la position 0 à la position 2), la couronne aimantée 144 se rapprochant alors du capteur à effet Hall 146, et on a la relation $x_c = \frac{1}{2}$ ($Y_2 - Y_1$), la valeur $x_c$ étant alors de signe négatif. Le signal représentatif de la différence des intervalles détectés $Y_2 - Y_1$ permet alors d'agir sur la commande du moteur électrique d'assistance 106, et ce dans le sens convenable, jusqu'à suppression du déphasage entre les deux portions d'arbre, c'est-à-dire jusqu'au retour à la position de repos illustrée en figure 2b.

L'invention n'est nullement limitée au mode de réalisation qui vient d'être décrit, mais englobe au contraire toute variante entrant dans le cadre des revendications qui suivent.

## Revendications

1. Dispositif d'assistance pour l'entraînement en rotation d'un arbre, notamment d'une colonne de direction d'un véhicule automobile, comportant un moteur d'assistance (106) agissant sur une portion d'arbre menée (102) en fonction du déplacement relatif d'une portion d'arbre menante (101) reliée à ladite portion d'arbre menée par l'intermédiaire d'une barre de torsion (103), ledit dispositif comportant en outre d'une part un carter fixe (104) formant logement pour la barre intermédiaire de torsion (103) et dans lequel tourillonnent ladite portion d'arbre menante (101) et ladite portion d'arbre menée (102), et d'autre part des moyens de détection (110) disposés dans ledit carter et servant à détecter le déphasage angulaire entre ladite portion d'arbre menante et ladite portion d'arbre menée, de façon à réaliser l'assistance par la commande dudit moteur (106) lorsqu'un déphasage est détecté, caractérisé par le fait que les moyens de détection (110) comprennent d'une part des premiers moyens de détection associés à la portion d'arbre menante (101), lesdits premiers moyens de détection étant essentiellement constitués par une roue (141) solidaire en rotation de ladite portion d'arbre menante, avec cependant possibilité d'un coulissement axial par rapport à celle-ci, et par un double capteur de proximité (145, 146) monté sur le carter fixe (104) et associé à ladite roue pour permettre une détection supplémentaire du sens de rotation, et d'autre part des seconds moyens de détection associés à la portion d'arbre menée (102), lesdits seconds moyens de détection étant essentiellement constitués par des biellettes de transmission (147), reliant ladite portion d'arbre menée à ladite roue de façon à déplacer celle-ci, dans une direction axiale ou dans la direction axiale opposée, proportionnellement au déphasage relatif entre les deux portions d'arbre (101, 102).

2. Dispositif d'assistance selon la revendication 1, caractérisé par le fait que la roue (141) porte une couronne périphérique aimantée (144) passant entre deux capteurs à effet Hall (145, 146) constituant le double capteur de proximité.

3. Dispositif d'assistance selon l'une des revendications 1 et 2, caractérisé par le fait que la roue (141) est soumise à l'action de moyens élastiques de rappel (150) tendant à la repousser vers la portion d'arbre menée (102), et disposés entre ladite roue et une couronne de butée (151) solidaire en rotation de la portion d'arbre menante (101).

4. Dispositif d'assistance selon l'une des revendications 1 à 3, caractérisé par le fait qu'il comporte un manchon cylindrique (117) monté sur la portion d'arbre menée (102), solidairement et coaxialement à celle-ci, et sur lequel sont articulées les biellettes de transmission (147) disposées tangentiellement.

5. Dispositif d'assistance selon la revendication 4, caractérisé par le fait que le manchon cylindrique (117) présente en outre une couronne dentée (109), engrènant avec un pignon (108) monté sur l'arbre de sortie (107) du moteur d'assistance (106).

6. Dispositif d'assistance selon l'une des revendications 1 à 5, caractérisé par le fait que le moteur d'assistance (106) est un moteur électrique, qui est également logé dans le carter fixe (104).

7. Dispositif d'assistance selon l'une des revendications 1 à 6, faisant partie de la direction assistée d'un véhicule automobile, et dans lequel la portion d'arbre menante est un arbre de la colonne de direction côté volant et la portion d'arbre menée est un arbre de la colonne de direction côté roues, caractérisé par le fait que les moyens de détection (110) agissent sur la commande du moteur d'assistance (106) en fonction de la vitesse du véhicule, au regard d'une vitesse faible prédéterminée, de façon à ne réaliser l'assistance que lorsque la vitesse du véhicule est inférieure à cette vitesse faible prédéterminée.

## Patentansprüche

1. Servo-Drehsteuerungseinrichtung für eine Welle, insbesondere für die Lenksäule eines Fahrzeugs, enthaltend einen Servomotor (106), der auf einen angetriebenen Wellenteil (102) entsprechend der relativen Verschiebung eines antreibenden Wellenteils (101) einwirkt, der mit dem genannten angetriebenen Wellenteil über einen Torsionsstab (103) verbunden ist, wobei die genannte Einrichtung außerdem einerseits ein festes Gehäuse (104) enthält, welches als Aufnahmesitz für den dazwischenliegenden Torsionsstab (103) dient und worin der genannte antreibende Wellenteil (101) und der genannte angetriebene Wellenteil (102) rotieren, und andererseits Erfassungsmittel (110), die in dem genannten Gehäuse angeordnet sind und dazu dienen, die Winkelverschiebung zwischen dem genannten antreibenden Wellenteil und dem genannten angetriebenen Wellenteil so zu erfassen, daß bei Erfassung einer Verschiebung die Servosteuerung des genannten Motors (106) bewirkt wird, **dadurch gekennzeichnet,** daß die Erfassungsmittel (110) einerseits erste Erfassungsmittel enthalten, die dem antreibenden Wellenteil (101) zugeordnet sind, wobei die genannten ersten Erfassungsmittel im wesentlichen aus einem drehbeweglich mit dem genannten antreibenden Wellenteil verbundenen Rad (141) bestehen, jedoch mit der Möglichkeit einer axialen Gleitbewegung im Verhältnis dazu, und aus einem doppelten Näherungsgeber (145, 146), der am festen Gehäuse (104) angebracht und dem genannten Rad zugeordnet ist, um eine zusätzliche Erfassung der Drehrichtung zu ermöglichen, und andererseits zweite Erfassungsmittel, die dem angetriebenen Wellenteil (102) zugeordnet sind, wobei die genannten zweiten Erfassungsmittel im wesentlichen aus Übertragungsstangen (147) bestehen, die den genannten angetriebenen Wellenteil mit dem genannten Rad so verbinden, daß dieses in axialer Richtung oder in der gegenüberliegenden axialen Richtung proportional zur relativen Verschiebung zwischen den beiden Wellenteilen (101, 102) verlagert wird.

2. Servo-Steuerungseinrichtung nach Anspruch 1, **dadurch gekennzeichnet**, daß das Rad (141) einen magnetischen Umfangskranz (144) trägt, der zwischen zwei Hall-Effekt-Gebern (145, 146) hindurchtritt, die den Doppel-Näherungsgeber bilden.

3. Servo-Steuerungseinrichtung nach einem der Ansprüche 1 und 2, **dadurch gekennzeichnet,** daß das Rad (141) der Einwirkung von elastischen Rückholmitteln (150) ausgesetzt ist, die dazu neigen, es in Richtung auf den angetriebenen Wellenteil (102) zurückzuschieben, und die zwischen dem genannten Rad und einem Anschlagkranz (151) angeordnet sind, der drehbeweglich mit dem antreibenden Wellenteil (101) verbunden ist.

4. Servo-Steuerungseinrichtung nach einem der Ansprüche 1 bis 3, **dadurch gekennzeichnet,** daß sie eine zylindrische Muffe (117) enthält, die am angetriebenen Wellenteil (102), damit fest verbunden und koaxial dazu angeordnet, angebracht ist und woran gelenkig die tangential angeordneten Übertragungsstangen (147) befestigt sind.

5. Servo-Steuerungseinrichtung nach Anspruch 4, **dadurch gekennzeichnet**, daß die zylindrische Muffe (117) außerdem einen Zahnkranz (109) aufweist, der mit einem Ritzel (108) in Eingriff steht, welches an der Abtriebswelle (107) des Servomotors (106) angebracht ist.

6. Servo-Steuerungseinrichtung nach einem der Ansprüche 1 bis 5, **dadurch gekennzeichnet,** daß der Servomotor (106) ein Elektromotor ist, der ebenfalls in dem festen Gehäuse (104) untergebracht ist.

7. Servo-Steuerungseinrichtung nach einem der Ansprüche 1 bis 6, gehörend zur Servolenkung eines Kraftfahrzeugs und worin der antreibende Wellenteil eine Welle der Lenksäule auf der Lenkradseite und der angetriebene Wellenteil eine Welle der Lenksäule auf der Radseite ist, **dadurch gekennzeichnet,** daß die Erfassungsmittel (110) auf die Steuerung des Servomotors (106) entsprechend der Fahrzeuggeschwindigkeit im Vergleich zu einer vorher festgelegten geringen Geschwindigkeit einwirken, so daß die Servosteuerung nur wirksam wird, wenn die Fahrzeuggeschwindigkeit unter dieser vorher festgelegten geringen Geschwindigkeit liegt.

**Claims**

1/ A device for providing power assistance in rotating a shaft, in particular the steering column of a motor vehicle, the device comprising a power-assistance motor (106) acting on a driven portion (102) of the shaft as a function of its displacement relative to a driving portion (101) of the shaft which is connected to said driven portion of the shaft by means of a torsion bar (103), said device further including firstly a fixed case (104) constituting a housing for the intermediate torsion bar (103) and in which both said driving portion (101) and said driven portion (102) of the shaft rotate, and secondly detection means (110) disposed inside said case and serving to detect the angular phase difference between said driving and driven portions of the shaft, thereby making it possible to provide power assistance by powering said motor (106) whenever a phase difference is detected, the device being characterized by the fact that detection means (110) comprise both:

first detection means associated with the driving portion (101) of the shaft, said first detection means being essentially constituted by a wheel (141) constrained to rotate with said driving portion of the shaft but free to slide axially relative thereto, and by a pair of proximity sensors (145, 146) mounted on the fixed case (104) and associated with said wheel in order to allow an additionnal detection of the rotation direction; and

second detection means associated with the driven portion (102) of the shaft, said second detection means being essentially constituted by transmission links (147) connecting said driven portion of the shaft to said wheel in such a manner as to displace the wheel axially in one direction or in the opposite direction by an amount proportional to the relative phase difference between the two portions (101, 102) of the shaft.

2/ A power-assistance device according to claim 1, characterized by the fact that the wheel (141) carries a magnetized peripheral ring (144) passing between two Hall effect sensors (145, 146) constituting the pair of proximity sensors.

3/ A power-assistance device according to claim 1 or 2, characterized by the fact that the wheel (141) is subjected to the action of resilient return means (150) urging it towards the driven portion (102) of the shaft and disposed between said wheel and an abutment ring (151) constrained to rotate with the driving portion (101) of the shaft.

4/ A power-assistance device according to any one of claims 1 to 3, characterized by the fact that it includes a cylindrical sleeve (117) mounted on the driven portion (102) of the shaft, said sleeve being fixed thereon and coaxial therewith, and the tangentially disposed transmission links (147) being hinged on said sleeve.

5/ A power-assistance device according to claim 4, characterized by the fact that the cylindrical sleeve (117) further includes a toothed ring (109) meshing with a gear wheel (108) mounted on the outlet shaft (107) of the power-assistance motor (106).

6/ A power-assistance device according to any one of claims 1 to 5, characterized by the fact that the power-assistance motor (106) is an electric motor which is also housed in the fixed case (104).

7/ A power-assistance device according to any one of claims 1 to 6, constituting a portion of power-assisted steering for a motor vehicle, and in which the driving portion of the shaft is a steering wheel end shaft of the steering column and the driven portion of the shaft is a steered wheel end portion of the steering column, the device being characterized by the fact that the detection means (110) act on the control of the power-assistance motor (106) as a function of the speed of the vehicle, relative to a low predetermined speed and in such a manner as to provide assistance only when the speed of the vehicle is lower than said predetermined low speed.

FIG. 1

FIG. 2a

FIG. 2b

FIG. 2c